Europäisches Patentamt

European Patent Office

Office européen des brevets

Publication number: **0 285 279**

**A2**

## EUROPEAN PATENT APPLICATION

(21) Application number: 88302074.5

(22) Date of filing: 10.03.88

(51) Int. Cl.⁴: **F16L 43/00**

(30) Priority: 02.04.87 GB 8707888

(43) Date of publication of application:
05.10.88 Bulletin 88/40

(84) Designated Contracting States:
AT BE CH DE ES FR GB GR IT LI LU NL SE

(71) Applicant: GATES HYDRAULICS LIMITED
Station Road
St. Neots Cambridgeshire(GB)

(72) Inventor: Knight, Colin Harland
1 The Causeway
Carlton Bedford(GB)
Inventor: Silcock, David Terence
4 Barley Court Crosshall Road
Eaton Ford St. Neots Cambridgeshire(GB)
Inventor: Keast, Geoffrey Richard
4 Field Close
Buckden Cambridgeshire(GB)

(74) Representative: Carpmael, John William
Maurice et al
CARPMAELS & RANSFORD 43 Bloomsbury
Square
London, WC1A 2RA(GB)

(54) Elbow connector.

(57) A right angled elbow connector which consists of a body 10 carrying a hose connector extension 11 with an axial bore 12 extending through it into the body 10. In the body 10 has a radial bore 13 into which is brazed a spigot 14 carrying a captive nut 15. The nut is a solid nut rather than the conventional crimped type of nut. The spigot 14 has one or more grooves around its periphery at 17 which may optionally be fitted with a washer or circlip 18. A ring of brazing material is placed at 20.

During brazing the washer or circlip, or the groove 17 itself prevents flow of the brazing metal up the spigot to the nut. The c-ring is only essential if it is desired to braze the spigot in position with the nut uppermost in which case the washer or circlip prevents the nut falling on to the brazing material.

Fig. 1

## "ELBOW CONNECTOR"

This invention relates to elbow connectors for fluid flow. The term elbow connector covers a connector which has a main body with an inlet (or outlet) and a side extension set at an angle to the main body with a corresponding outlet (or inlet).

The invention is particularly concerned with elbow connectors of a type where the side connection incorporates a captive nut.

An object of the present invention is to provide such an elbow connector which may be manufactured by brazing the side extension to the main body.

The side extension may take the form of a spigot which carries the captive nut, the nut being a loose fit on the spigot but being retained thereby a bulbous extension of the spigot.

The spigot is desirably to be brazed into a bore in the main body. One problem with such brazing is that the brazing material tends to flow by capilliary action up the spigot and to reach the nut thus causing the nut to become brazed to the body or to the spigot.

Even if the brazing operation is performed with the spigot arranged to extend vertically upwards away from the body, the brazing material would still flow sufficiently far to reach the nut, particularly as the nut, in this situation, will fall until it rests on the body.

Similarly if the brazing takes place with the spigot pointing downwardly, which causes the nut to fall down to the bottom of the spigot, the brazing material will flow by gravity and capilliary action down the spigot to the nut and cause it to become brazed to the spigot.

In accordance with the present invention, a barrier is provided to prevent the brazing metal flowing along the spigot from the body to the nut.

Thus in accordance with the present invention, from one aspect, the fluid flow elbow connector comprises a body with an inlet, or outlet, and an angled extension with a corresponding outlet, or inlet, the extension comprising a spigot with a captive nut on it, the spigot being brazed to the body and a barrier member being provided on the spigot to prevent flow of brazing metal reaching the nut. The barrier member may be one or more grooves or recesses running round the outer surface of the spigot. A simple groove or recess is sufficient to trap brazing material and so is adequate when the brazing takes place with the spigot pointing downwardly.

Alternatively, or in addition there may be a washer or a C-ring on the spigot. If there are one or more grooves or recesses the washer or C-ring may engage in a groove or recess. Alternatively, if no groove or recess is used. the washer may be an interference fit on the shank of the spigot. This washer or C-ring then acts as a physical barrier to movement of the nut down towards the body of the elbow connector as well as acting as a barrier to flow of brazing material.

Preferably the body is of circular cross-section and the spigot is connected to the body by a bore extending radially into the body, or extending into the body at an angle to the axis of the body.

By using a circular body, it is possible to simultaneously drill the main axial bore in the body and the radial bore which is to receive the spigot on a drilling machine.

If a square body is used it is not easy to set up simultaneous drilling operations.

From another aspect the invention comprises a method of manufacturing an elbow connector comprising forming an axial bore in a connector body. forming preferably simultaneously. a radial bore in the body, inserting a spigot into the radial bore with brazing metal. the spigot carrying a captive nut and being provided with a barrier to prevent brazing metal flowing along the spigot to reach the captive nut, and heating the assembly, preferably in an inert atmosphere, so as to cause the spigot to become brazed to the body.

In the accompanying drawings:-

Figure 1 is an elevation partly in section of a right-angled elbow connector embodying a present invention;

Figure 2 is a modification of the embodiment shown in Figure 1; and

Figure 3 is a scrap section through a further modification of the embodiment shown in Figure 1.

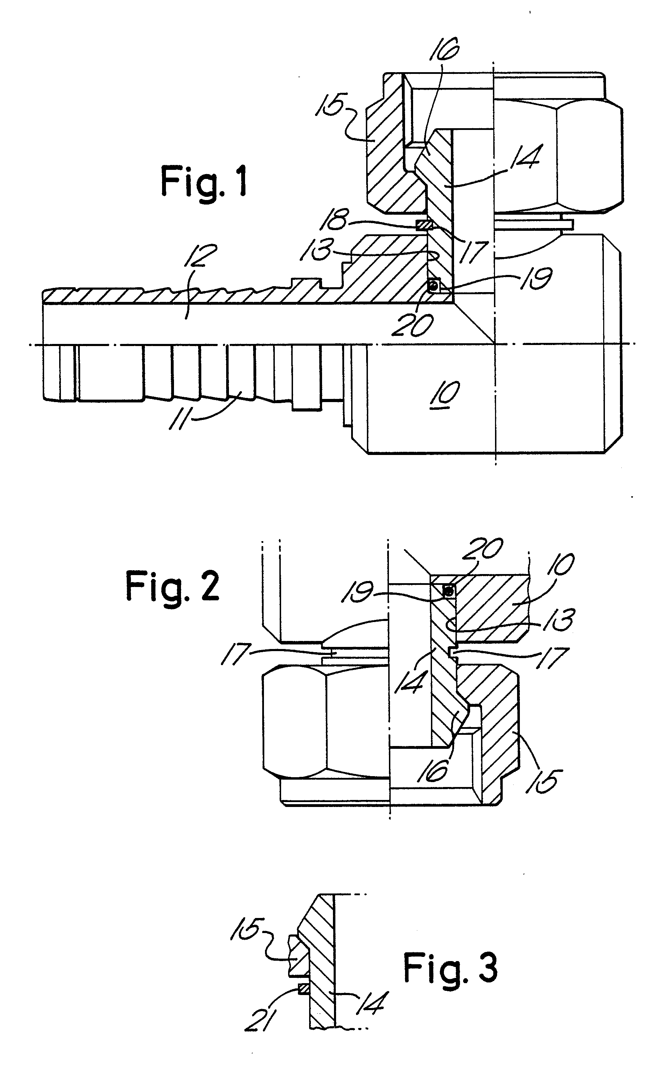

In Figure 1 is shown a right-angled elbow connector comprising a body 10 carrying a hose connector extension 11 which has an axial bore 12 extending through it into the body 10. In the body 10 is a radial bore 13 into which is brazed a spigot 14 carrying a captive nut 15, retained by a bulbous extension 16 of the spigot. It will be noted that the nut 15 is a solid nut rather than a crimped type of nut. Application of this invention enables one to use a solid nut whereas previously it has been necessary to use a crimped nut in a similar situation.

The spigot 14 has a groove running around its periphery at 17 in which is fitted a washer or circlip 18.

The spigot has a portion cut away at 19 to receive a ring of brazing material 20.

To assemble this elbow connector. the spigot 14 is passed through the nut 15. and into the radial bore 13. with the brazing metal in place at 20

The washer or circlip (it may be a C-ring) is placed in the groove 17 to prevent flow of the brazing metal up the spigot to the nut. and also to prevent the nut dropping onto the body 10.

The whole assembly is then heated in an inert atmosphere and the spigot is thus brazed to the body. It will be noted that in Figure 1 the spigot is pointing vertically upwardly. If the spigot is assembled to the body whilst pointing downwardly as shown in Figure 2, it is not essential to use the washer or circlip 18. The groove or recess 17 may be relied upon to create a barrier to flow of the brazing metal and of course the nut 15 will drop downwardly to the position shown in Figure 2 well out of the way of the brazing metal which would be stopped by the groove or recess 17.

Instead of using a groove and circlip as in Figure 1, a simple washer may be employed as shown in Figure 3, the washer 21 being an interference fit on the spigot 14. This washer serves the same function as the circlip 18 in Figure 1.

By using a circular section body 10 it is possible to simultaneously drill the bore 12 and the radial bore 13. In other words the bores can be simultaneously cross-drilled on a drilling machine such as a Whitman automatic machine.

Advantages of the use of this invention are that the solid nut can be used instead of a crimp nut, that the bores can be drilled simultaneously, and that the barrier groove or washer whichever is used prevents brazing metal climbing up to the nut and prevents the nut becoming brazed to either the spigot or body of the elbow connector.

The term elbow connector of course covers a connector in which the inlet and outlet are at any desired angle although more elbow connectors in common use are at 90° or 45° or 30°.

## Claims

1. A fluid flow elbow connector comprising a body (10) with an inlet, or outlet, and an angled extension with a corresponding outlet, or inlet, the extension comprising a spigot (14) with a captive nut (15) on it, the spigot (14) being adapted to be brazed to the body, characterised by a barrier member (17;18;21) on the spigot to prevent flow of brazing metal reaching the nut.

2. A fluid flow elbow connector according to claim 1 characterised by the barrier member being in the form of one or more grooves or recesses (17) running around the outer surface of the spigot.

3. A fluid flow elbow connector according to claim 1 and in which the barrier member is a c-ring or washer (21) on the spigot.

4. A fluid flow elbow connector according to claim 2 characterised in that there is a washer or c-ring (18) engaged in one of said grooves or recesses (17) so as to form part of said barrier.

5. A fluid flow elbow connector according to claim 3 characterised in that the washer (21) is an interference fit on the shank of the spigot (14).

6. A fluid flow elbow connector according to any preceding claim characterised in that the body (10) is of circular cross section and the spigot (14) is connected to the body (10) by a bore (13) extending radially into the body (10) or extending into the body at an angle to the axis of the body.

7. A method of manufacturing an elbow connector comprising forming an axial bore (12) in a connector body (10), forming a radial bore (13) in the body, inserting a spigot (14) into the radial bore (10) with a ring of brazing metal (20), the spigot (14) carrying a captive nut (15) characterised by the spigot (14) being provided with a barrier (17;18;21) which prevents brazing metal flowing along the spigot to reach the captive nut when heating the assembly so as to cause the spigot (14) to become brazed to the body (10).

8. A method according to claim 7 characterised in that the axial bore (12) and the radial bore (13) are formed simultaneously.

9. A method according to claim 7 or claim 8 characterised in that the brazing is effected by heating the assembly in an inert atmosphere.

Fig. 1

Fig. 2

Fig. 3